# EUROPEAN PATENT APPLICATION

(11) **EP 2 693 154 A1**
(43) Date of publication of application: **05.02.2014**
(21) Application number: 12764918.4
(22) Date of filing: 13.02.2012
(51) Int. Cl.: F28F 27/00, G01N 17/00

(54) **HEAT EXCHANGER AND METHOD FOR ESTIMATING REMAINING LIFE OF HEAT EXCHANGER**

(30) Priority: 31.03.2011 JP 2011080429
(71) Applicant: Mitsubishi Heavy Industries, Ltd., Tokyo 108-8215 (JP)
(72) Inventor: KAMIYAMA, Naoyuki, Minato-ku, Tokyo 108-8215 (JP); MIYACHI, Tsuyoshi, Minato-ku, Tokyo 108-8215 (JP); OKAMOTO, Takuya, Minato-ku, Tokyo 108-8215 (JP); SATO, Yuichiro, Minato-ku, Tokyo 108-8215 (JP)
(74) Representative: Bongiovanni, Simone
(86) International application number: PCT/JP2012/053271
(87) International publication number: WO 2012/132587

(57) **Abstract**

Dummy tubes 30 are each provided near a gas inlet side and a gas outlet side of a heat recovery unit 104 and near a gas discharge side of a re-heater 108 via an intubation 31, and a heat medium 83 is circulated in the dummy tube 30 by a branched path L₂ which branches from a medium circulation path L₁. The dummy tube 30 is periodically extracted to check the quantity of thickness reduction of the surface thereof. Thus, it is possible to check the quantity of thickness reduction of the surface of the dummy tube, and determine the state of damage or the like of a heat transfer tube.

## Description

### Field

The present invention relates to a heat exchanger and a method for estimating a remaining life of the heat exchanger.

### Background

In an air pollution control device of a boiler for a thermal power generation plant and a chemical plant, as a general example of a system configuration, an NOx removal unit, an air pre-heater air heater, a heat recovery unit of a re-heating gas-gas heater, a dry electronic precipitator, a wet desulfurization unit, and a re-heater and a stack of the gas-gas heater are disposed in a flue gas flow path in order. Herein, a water tube type gas-gas heater is configured to connect the heat recovery unit with the re-heater by a cold and hot water circulation line to perform the heat exchange with the flue gas by a circulation pump using water as a medium.

In this control device, after the flue gas of the boiler is led to the air heater, is heat-exchanged with the combustion air to cool the temperature of the flue gas to, for example, approximately 130 to 150°C, and is led to the heat recovery unit of the gas-gas heater to further cool the temperature of the flue gas, the flue gas is led to the electronic precipitator to remove the fly ash, and then the high-temperature flue gas at an outlet of the electronic precipitator is further cooled by the heat-exchange with water and is led to the wet desulfurization unit. In the wet desulfurization unit, SO₂ in the flue gas is absorbed and removed, for example, by an absorbent in which a limestone is dissolved in a slurry form, and in the gas-liquid contact process, the residual fly ash in the flue gas is also removed. Next, the flue gas from which SO₂ and the fly ash are removed is lead to the gas-gas heater re-heater. Herein, the temperature of the flue gas lowered by the SO₂ absorbent or the like in the processing procedure of the wet desulfurization unit is raised by the heat-exchange with a heat medium passing through the interior of the path disposed in the gas-gas heater re-heater. When the flue gas is emitted to atmosphere from the stack, there are provided a function of preventing an occurrence of white smoke due to the reduction of a quantity of water condensation, and a function of an improvement in diffusion efficiency due to the temperature rise.

For example, a fin tube-type heat exchanger has been proposed as a heat exchanging method of a large gas-gas heater heat recovery unit and the re-heater in a coal-fired power plant (Patent Literature 1).

### Citation List

### Patent Literature

Patent Literature 1: Japanese Laid-open Patent Publication No. 11-304138

### Summary

### Technical Problem

Incidentally, when maintenance of a heat transfer bundle of the heat exchanger is performed, the following problems have occurred.
1) In the case of a time-dependent wear due to an blast effect of the combustion fly ash to the heat transfer tube of the fin tube-type heat exchanger in thermal power generation plant, or when the composition of the same ash has the adhesion and corrosion resistance, the ash is fixed to the heat transfer surface, the corrosion proceeds, and the thickness of the tube decreases with time.

When an unplanned stop is performed due to the large-scale maintenance and the renewal of the bundle, damage from electric power selling due to the commercial operation inhibition occurs. For this reason, the heat medium leakage is a very important issue.

2) As a monitoring method for gasping the heat medium leakage, a water level of the heat medium tank is detected, when the water level drops to a predetermined level, an alarm is emitted from a control device, and when the alarm is emitted, first, it is estimated whether the leakage is on the heat recovery side or on the re-heating side (a heat medium input and output valves are closed one by one to confirm whether or not the water level of the heat medium tank drops), then a hermetic leak check is performed on the individual bundle of the specified side, and the refinement repair is performed at the position of the leak tube of the leak bundle by an air-tight test.

The detection due to the water level of the heat medium requires several hours/1 bundle in a stabilization time law of the flue gas and heat medium temperature, the air-tight test requires a few minutes per one position, and when the leakage position increases with time, the specification is very difficult.

An object of the invention is to provide a heat exchanger capable of eliminating the trouble of the leakage test time, and a method for estimating a remaining life of the heat exchanger in view of the above problems.

### Solution to Problem

According to a first aspect of the present invention in order to solve above problems, there is provided a heat exchanger having a plurality of heat transfer tubes for heat recovery or heat exchange, the heat exchanger including: a dummy tube provided in any one or both of a gas inlet side or a gas discharge side of the heat exchanger, for circulating a heat medium from a heat medium circulation path.

According to a second aspect of the present invention, there is provided the heat exchanger according to the first aspect, wherein the dummy tube is a through tube passing through the heat exchanger or a U-shaped tube folded back in the middle of the heat exchanger.

According to a third aspect of the present invention, there is provided the heat exchanger having a plurality of heat transfer tubes for heat recovery or heat exchange, the heat exchanger including: a dummy tube provided in any one or both of a gas inlet side or a gas discharge side of the heat exchanger, the dummy tube having a filling liquid in which an electrically conductive medium is contained in a heat medium from a heat medium circulation path; and a conductive sensor having a tip end immersed in the filling liquid.

According to a fourth aspect of the present invention, there is provided the heat exchanger according to any one of the first to third aspects, wherein the dummy tube is installed at a position in which a wear rate of the heat transfer tube is fast.

According to a fifth aspect of the present invention, there is provided a method of estimating a remaining life of the heat exchanger according to any one of the first to fourth aspects, including: determining a thickness reduction condition of the heat transfer tube from degradation state of the dummy tube; and predicting a replacement timing of the heat transfer tube.

### Advantageous Effects of Invention

According to the invention, it is possible to periodically extract the dummy tube, check the quantity of thickness reduction of the surface thereof, and determine the state of damage or the like of the heat transfer tube. Brief Description of Drawings

FIG. 1 is a schematic diagram of a heat exchanger of air pollution control equipment according to a first embodiment.
FIG. 2 is a schematic diagram of another heat exchanger according to the first embodiment.
FIG. 3 is a diagram illustrating a relation between a thickness of a heat transfer tube and an operating time.
FIG. 4 is a schematic diagram of a dummy tube according to a second embodiment.
FIG. 5 is a schematic diagram of the dummy tube according to the second embodiment equipped with a conductive sensor.
FIG. 6 is a schematic diagram of an air pollution control system to which a heat exchanger according to the embodiment is applied.

### Description of Embodiments

The invention will be described below in detail with reference to the accompanying drawings. In addition, the invention is not limited to the embodiments, and when there is a plurality of embodiments, the invention also includes a combined configuration of each embodiment. Furthermore, constituent elements in the embodiments described below include elements capable of being assumed by those of ordinary skill in the art or substantially the same elements.

### First embodiment

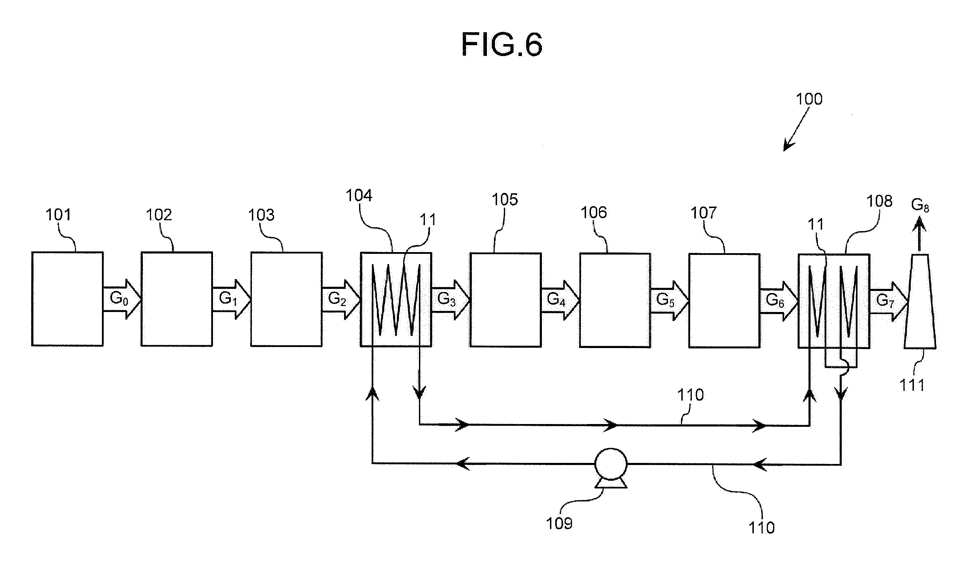

FIG. 6 is a schematic diagram of an air pollution control system to which a heat exchanger according to the embodiment is applied.

As illustrated in FIG. 6, an air pollution control system 100 removes nitrogen oxides (NOx), soot, and sulfur oxides (SOx) contained in the flue gas in the process when a flue gas G₈ discharged from a boiler 101 of power generation plants, factories and the like is discharged from a stack 111.

First, a flue gas Go discharged from the boiler 101 is introduced into an NOx removal device 102 filled with catalyst. In the NOx removal device 102, nitrogen oxide contained in the flue gas Go is reduced to water and nitrogen by ammonia (NH₃) injected as a reducing agent, and is converted into a harmless gas.

A flue gas G₁ discharged from the NOx removal device 102 is generally cooled to a temperature of 130°C to 150°C via an air heater (AH) 103.

A flue gas G₂ passed through the air heater 103 is introduced into a heat recovery unit 104 serving as a heat exchanger of a gas-gas heater, and the heat thereof is recovered by performing the heat exchange between the flue gas G₂ and a heat medium (for example, such as water). The temperature of a flue gas G₃ passed through the heat recovery unit 104, is approximately 85 to 110°C, and the precipitating capacity of an electronic precipitator (EP) 105 is improved.

The flue gas G₃ passed through the heat recovery unit 104 is introduced into the electronic precipitator 105, and the soot is removed.

A flue gas G₄ passed through the electronic precipitator 105 is boosted by a blower 106 that is driven by an electric motor. In addition, the blower 106 may not provided, and may also be disposed on the downstream of a re-heater 108 of the gas-gas heater.

A flue gas G₅ boosted by the blower 106 is introduced into a desulfurization unit 107. In the desulfurization unit 107, sulfur oxide in the flue gas G₅ is absorbed and removed by an absorbent in which a limestone is dissolved in a slurry form, and gypsum (not illustrated) is produced as a byproduct. Moreover, the temperature of a flue gas G₆ passed through the desulfurization unit 107 is generally reduced to about 50°C.

In the heat recovery unit 104 and the re-heater 108, a heat medium (not illustrated) is circulated through a pair of circulation paths 110 by a circulation pump 109, and is heat exchanged.

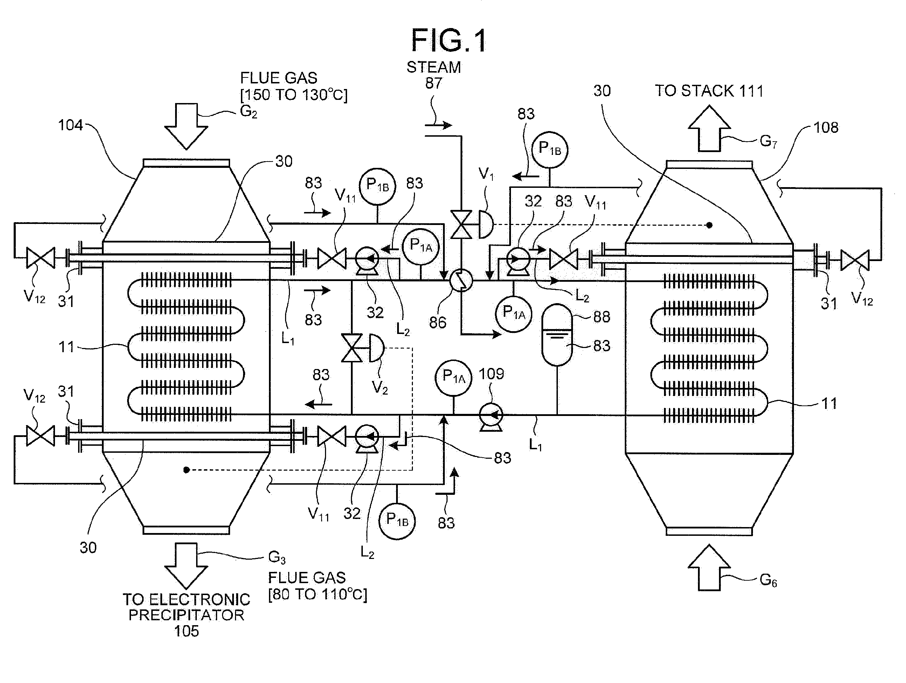

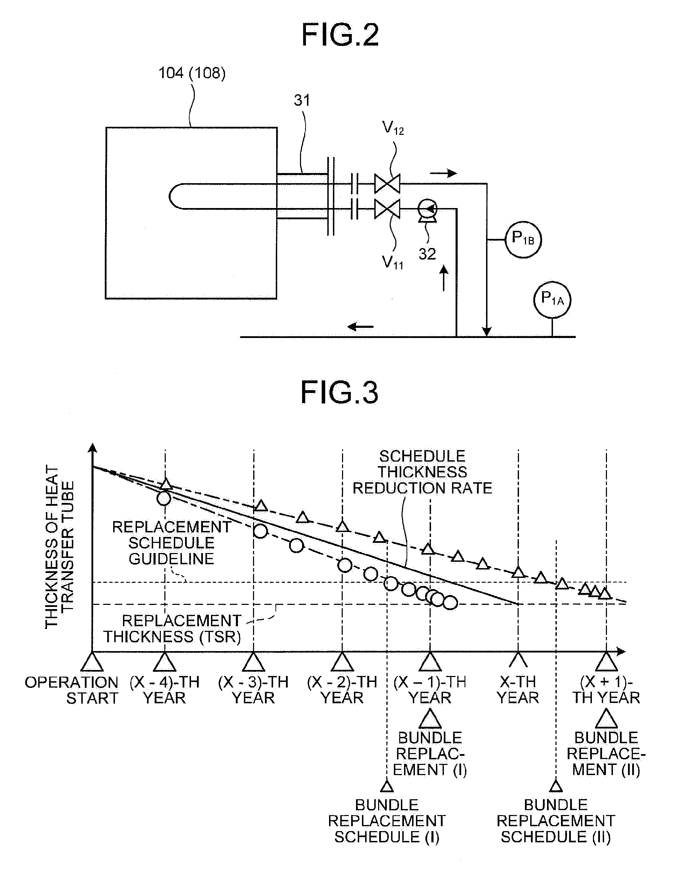

FIG. 1 is a schematic diagram of a heat exchanger of air pollution control equipment according to the first embodiment. FIG. 2 is a schematic diagram of another heat exchanger according to the first embodiment.

As illustrated in FIG. 1, the flue gas G₆ passed through the desulfurization unit 107 is introduced into the re-heater 108 serving as a heat exchanger of the gas-gas heater. In the process of circulating a heat medium 83 between the heat recovery unit 104 and the re-heater 108 so as to reciprocate in a pair of circulation paths L₁ by the circulation pump 109, the flue gas G₆ is heated by the recovery heat recovered by the heat recovery unit 104. Herein, the temperature of the flue gas G₆ of the desulfurization unit 107 of approximately of 50°C is reheated to approximately 85 to 110°C by the re-heater 108, and is emitted into the atmosphere from the stack 111.

In FIG. 1, there is provided a heat exchanger into which the flue gas G₂ is introduced to perform the heat exchange with the heat medium 83.

The heat exchanger has a heat medium circulation path L₁ through which the heat medium 83 is circulated between the heat recovery unit 104 and the re-heater 108. The heat medium 83 is circulated between the heat recovery unit 104 and the re-heater 108 via the heat medium circulation path L₁. On the surface of the heat medium circulation path L₁ provided on each of the interiors of the heat recovery unit 104 and the re-heater 108, a plurality of fins serving as a heat transfer tubes is provided in a heat transfer tube 11. A heat exchange unit 86 is provided in the heat medium circulation path L₁, and compensates energy equivalent to the temperature drop robbed in heat dissipation by heating with a steam 87 when the heat medium 83 is circulated, and thus the temperature of the medium of the heat medium 83 can be maintained and adjusted.

The heat medium 83 is supplied to the heat medium circulation path L₁ from a heat medium tank 88. The heat medium 83 is circulated in the heat medium circulation path L₁ by the circulation pump 109. Furthermore, a quantity of supply of the steam 87 is adjusted by a regulating valve V₁ according to the gas temperature of the flue gas G₆ from the desulfurization unit 107, and the heat medium 83 delivered to the re-heater 108 by a regulating valve V₂ according to the gas temperature of the flue gas G₃ discharged from the heat recovery unit 104 is supplied to the heat recovery unit 104, thereby adjusting the quantity of supply of the heat medium 83 delivered to the re-heater 108. In addition, a purified gas G₇ discharged from the re-heater 108 is discharged to the outside from the stack 111.

In the embodiment, a series internal circulation type dummy tube (hereinafter, referred to as a "dummy tube") 30 is provided near a gas inlet side and a gas outlet side of the heat recovery unit 104, and near a gas discharge side of the re-heater 108, via an intubation 31, respectively.

The heat medium 83 is circulated in the series internal circulation type dummy tube 30 by a branched path L₂ that branches from the heat medium circulation path L₁.

The series internal circulation type dummy tube 30 is preferably a bare tube to which an external fin is not fixed.

By extracting the heat medium 83 from the circulation path L₁ by a small pump 32, introducing the heat medium into the series internal circulation type dummy tube 30 and circulating the heat medium, a thickness reduction of an inner surface and an outer surface of the heat transfer tube 11 is easily managed.

In addition, by adjusting the degree of opening of front and back valves V₁₁ and V₁₂ of the series internal circulation type dummy tube 30, a pressure P_{1B} of the series internal circulation type dummy tube 30 side becomes slightly higher than a pressure gauge P_{1A} of the circulation path L₁, which makes it possible to return the heat medium 83 to the circulation path L₁.

The dummy tube 30 may be a through tube that passes through the heat recovery unit 104 (the re-heater 108) as illustrated in FIG. 1.

Furthermore, as illustrated in FIG. 2, in a case where the through tube is too long, it may be a U-shaped internal circulation type dummy tube folded back in the middle of the heat recovery unit 104 (the re-heater 108) inserted from one side.

As an installation position of the dummy tube 30, by estimating a location where a wear rate is high by the gas flow simulation or the like in advance, the dummy tube 30 may be installed in the vicinity thereof.

Moreover, the heat medium 83 partially extracted from the circulation path L₁ passes into the dummy tube 30, and the dummy tube 30 is periodically extracted to check the quantity of thickness reduction of the surface.

In addition, by installing the dummy tube 30 at a plurality of locations, the approximate damage position can also be understood, and measures also become easier.

The replacement timing of the heat transfer tube 11 is estimated from the periodical extraction test results by extrapolation, and the necessary replacement time can be guessed. Thus, it is possible to minimize the residual thickness, and the update facility can also be efficiently prepared.

FIG. 3 is a graph illustrating a relation between the thickness of the heat transfer tube and an operating time.

In FIG. 3, it is assumed that a plan of replacing the bundle serving as a collection of the heat transfer tube in the X-th year was drafted, based on a planned thickness reduction rate (solid line).

If a thickness reduction rate estimation frequency can be raised by the dummy tube of the embodiment, a prediction accuracy of the remaining life is improved, and the maintenance plan is easily made in response thereto.

As a result, since the equipment can be operated nearly to the remaining life years, there is no need for any unnecessary renewal work.

Specifically, in a case where the measured thickness reduction rate is faster than the planned thickness reduction rate by the periodic check, a bundle replacement schedule (I) is set, and the bundle replacement (I) is performed in the (X - 1)-th year.

In this case, since the bundle is exchanged earlier than planning of the X-th year, it takes a maintenance cost, but it is possible to avoid a situation of a sudden stop of the plant.

In contrast, in a case where the measured thickness reduction rate is slower than the planned thickness reduction rate by the periodical check, a bundle replacement schedule (II) is set, and the bundle replacement (II) is performed in the (X + 1)-th year.

In this case, since the bundle is exchanged slower than planning of the X-th year, the maintenance cost is reduced, and it is not necessary to perform the unnecessary renewal work at the timing of the drafted replacement schedule guideline.

In addition, thickness shell requirement (TSR) in FIG. 3 refers to a minimum thickness required for the heat transfer tube to keep the strength.

According to the invention, by installing the dummy tube, it is possible to manage the quantity of thickness reduction during operation.

In addition, the accuracy of the thickness reduction management is improved by monitoring the corrosion thickness reduction due to the heat medium 83 on the inner surface of the heat transfer tube 11, and monitoring the wear of the outer surface and the internal corrosion.

Furthermore, even in the periodical check, it is possible to minimize the residual thickness by estimating the necessary replacement time, and it is also possible to efficiently prepare the update facility.

### Second embodiment

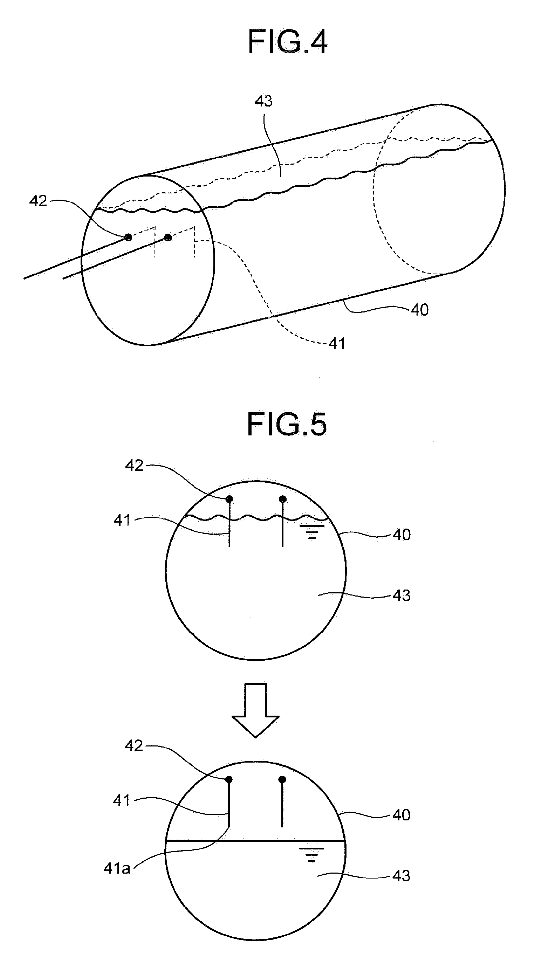

FIG. 4 is a schematic diagram of a dummy tube with a sensor according to a second embodiment. FIG. 5 is a schematic diagram illustrating a configuration in which a conductive sensor is installed in the dummy tube with the sensor according to the second embodiment.

As illustrated in FIGS. 4 and 5, a dummy tube 40 with a sensor of the embodiment (hereinafter, referred to as "dummy tube") is filled with a filling liquid 43 in which an electrically conductive medium is contained in the heat medium from a heat medium line.

Moreover, a conductive sensor 41, a tip end 41a of which is immersed in the filling liquid 43, is provided to be sealed by a seal 42.

Moreover, the dummy tubes 40 with the sensor provided with the conductive sensor 41 are installed at a plurality of locations of a part where it is predicted that the wear is likely to occur by pre-simulation.

The dummy tube 40 with the sensor is filled with the filling liquid 43 containing the electrically conductive medium and is sealed by the seal 42.

When the dummy tube 40 with the sensor becomes thinner and becomes lower than the tip end 41a of the conductive sensor 41, the conductive sensor 41 senses a non-conductive state, and notifies the alarm to a remote monitoring system to inform the abnormality of the dummy tube.

In this manner, in the invention, by installing the dummy tube, it is possible to extract the dummy tube periodically, check the quantity of thickness reduction of the surface, and determine the state of damage or the like of the heat transfer tube.

Furthermore, it is possible to determine the thickness reduction condition of the heat transfer tube from the deterioration state, and to predict the replacement timing of the heat transfer tube.

### Reference Signs List

30, 40 DUMMY TUBE
41 CONDUCTIVE SENSOR
83 HEAT MEDIUM

## Claims

1. A heat exchanger having a plurality of heat transfer tubes for heat recovery or heat exchange, the heat exchanger comprising:
a dummy tube provided in any one or both of a gas inlet side or a gas discharge side of the heat exchanger, for circulating a heat medium from a heat medium circulation path.

2. The heat exchanger according to claim 1,
wherein the dummy tube is a through tube passing through the heat exchanger or a U-shaped tube folded back in the middle of the heat exchanger.

3. A heat exchanger having a plurality of heat transfer tubes for heat recovery or heat exchange, the heat exchanger comprising:
a dummy tube provided in any one or both of a gas inlet side or a gas discharge side of the heat exchanger, the dummy tube having a filling liquid in which an electrically conductive medium is contained in a heat medium from a heat medium circulation path; and
a conductive sensor having a tip end immersed in the filling liquid.

4. The heat exchanger according to any one of claims 1 to 3,
wherein the dummy tube is installed at a position in which a wear rate of the heat transfer tube is fast.

5. A method of estimating a remaining life of the heat exchanger according to any one of claims 1 to 4,comprising:
determining a thickness reduction condition of the heat transfer tube from degradation state of the dummy tube; and
predicting a replacement timing of the heat transfer tube.
